Europäisches Patentamt

European Patent Office

Office européen des brevets

(19)

(11) Publication number: **0 112 614**
A2

# EUROPEAN PATENT APPLICATION

(21) Application number: 83305894.4

(22) Date of filing: 29.09.83

(51) Int. Cl.³: **B 01 D 13/04**, C 08 J 9/26,
C 08 L 23/12
// A61M1/03

(30) Priority: 30.09.82 US 430559

(71) Applicant: **EXTRACORPOREAL MEDICAL
SPECIALITIES INC., Royal and Ross Road, King of
Prussia Pennsylvania 19406 (US)**

(43) Date of publication of application: 04.07.84
Bulletin 84/27

(72) Inventor: **Clark, Jeffrey G., 15 Carrigan Avenue, Spring
City Pennsylvania 19475 (US)**
Inventor: **Taylor, JohnA., 32 Robin Road, Furlong
Pennsylvania 18925 (US)**

(74) Representative: **Jones, Alan John et al, CARPMAELS &
RANSFORD 43 Bloomsbury Square, London, WC1A 2RA
(GB)**

(84) Designated Contracting States: **BE DE FR GB IT**

(54) **Semipermeable membranes and method of making the same.**

(57) The present invention provides a composition from which a semipermeable membrane may be made by processing said composition at an elevated temperature, said composition comprising a mixture of polypropylene, a second polymer and a processing aid, said processing aid and said polypropylene being compatible at said elevated temperature and being incompatible when a heated mixture of said polypropylene and said processing aid is cooled to ambient temperature, said second polymer and said processing aid being compatible when heated to said elevated temperature and also being compatible when a heated mixture of said second polymer and said processing aid is cooled to ambient temperature, said mixture being compatible at said elevated temperature and exhibiting phase separation of at least said polypropylene at ambient temperature. The invention further provides semipermeable membranes, and a process for making a semipermeable membrane.

SEMIPERMEABLE MEMBRANES AND METHOD OF MAKING THE SAME

BACKGROUND OF THE INVENTION

Field Of The Invention

This invention relates to semipermeable membranes (which have sometimes been referred to in the patent and other literature as "microporous" membranes), to compositions from which such semipermeable membranes may be made, and to processes for making such semipermeable membranes. The semipermeable membranes of the invention have excellent strength and flexibility, can be readily handled without impairing their physical integrity, and can be easily fabricated into devices for the separation of substances. Semipermeable membranes in accordance with the invention can be in the form of thin films, tubing or hollow fibers and can be used in such medical applications as oxygenation and plasmapheresis.

Description Of The Prior Art

Commercially available semipermeable membranes are made from a variety of polymers including cellulose; cellulose esters; polyolefins such as polypropylene; polyacrylonitrile, polyamides, polysulfones, and the like. Such membranes are available in a range of pore sizes and have been used in, for example, dialysis and blood oxygenation applications. A semipermeable membrane of polypropylene is available from the Celanese Corporation under the trademark Celgard. A polypropylene membrane is also available from Enka Glanzstoff of Wuppertal, West Germany, under the tradename PLASMAPHAN and has been suggested for use in such applications as plasma separation. One difficulty with polypropylene membranes is that they are brittle and thus difficult to handle and fabricate into the aforementioned medical devices. Another difficulty with heretofore available prior art membranes made from polypropylene is that they are deficient in tensile strength.

## Summary of the Invention

In accordance with one aspect of the present invention, semipermeable membranes can be made which have a combination of tensile strength, initial modulus and percent elongation at break which makes them extremely attractive for use in such medical devices as plasma separators and blood oxygenators. These membranes can be made from a starting composition which comprises a mixture of (a) from about 10 percent to about 30 percent by weight of polypropylene, (b) from about 1 percent to about 15 percent by weight of a second polymer, and (c) from about 55 percent to about 80 percent by weight of a processing aid, the percentages of these components being such that for a given mixture they equal one hundred percent. The composition of the invention may also comprise minor amounts of such additives as antioxidants, coloring agents, and the like.

The foregoing starting compositions may be converted, for example by extrusion at an elevated temperature, into a shaped intermediate article having the form of a film, tubing, hollow fiber or the like. The intermediate article may be subsequently processed, as for example, by extraction, to remove the processing aid and, optionally, some part or substantially all of the second polymer, to thereby provide a semipermeable membrane whose form corresponds generally to that of the shaped intermediate article.  A mixture of the polypropylene and the processing aid must be compatible at the elevated processing temperature and incompatible when cooled to ambient temperature.  A mixture of the processing aid and the aforementioned second polymer must be compatible at the elevated processing temperature and must remain compatible when cooled to ambient temperature.  The mixture of the polypropylene, the second polymer and the processing aid must be compatible at the elevated temperature and must exhibit phase separation of the polypropylene when cooled to ambient temperature.

The polypropylene which is included in the starting composition is present in the final semipermeable membrane.  Depending on the processing conditions used, all, some, or substantially none of the second polymer may be retained in the final semipermeable membrane.  When all or some of the second polymer present in the starting composition is retained, the final semipermeable membrane includes both polypropylene and the second polymer as its principal membrane forming components.  When substantially all of the second polymer present in the starting composition is removed, the membrane forming component of the final semipermeable membrane consists essentially of polypropylene with perhaps minor amounts of unremoved second polymer.  In either case, it is contemplated that the processing aid of the starting composition will be substantially completely removed during processing; as a result the final semipermeable membrane contains only minor amounts, e.g., 0.5% by weight or less, of the processing aid.

At present, the second polymer comprising the starting composition is preferably selected from the group consisting of 1,2-syndiotactic polybutadiene, 1,4-polybutadiene, and polyvinyl chloride.  Of these polymers, 1,2-syndiotactic polybutadiene is most preferred.

The presently preferred processing aid included in the starting composition is di-(2-ethylhexyl)phthalate, which is sometimes called "dioctyl phthalate" or "DOP". While DOP is the presently preferred processing aid, alternative liquid materials would be suitable for use as processing aids provided such alternative materials have a boiling point which is higher than the melting point of the polypropylene and the second polymer and further provided that the aforementioned compatability requirements are met.

Semipermeable membranes according to the invention can be made in film, sheet, tube or hollow fiber form. They have excellent strength, flexibility, and elongation as a result of which they can be easily fabricated into a variety of medical or industrial devices useful for the separation of substances from one another. Semipermeable membranes in accordance with the present invention have been made with various hydraulic permeabilities and, as mentioned earlier, can be used in such devices as oxygenators, plasma separators and the like.

In accordance with still another aspect of the present invention, there is provided a process for making semipermeable membranes comprising polypropylene, which process includes the steps of providing a mixture of (a) from about 10 percent to about 30 percent by weight of polypropylene, (b) from about 1 percent to about 15 percent by weight of a second polymer, and (c) from about 55 percent to about 80 percent by weight of a processing aid; heating said mixture until it is homogeneous; forming said heated homogeneous mixture into a shaped article; cooling said shaped article; and removing said second polymer and said liquid processing aid from said shaped, cooled article.

The invention also includes a process for making semipermeable membranes comprising polypropylene and a second polymer, which process includes the steps of providing a mixture of (a) from about 10 percent to about 30 percent by weight of polypropylene, (b) from about 1 percent to about 15 percent by weight of a second polymer, and (c) from about 55 percent to about 80 percent by weight of a processing aid; heating said mixture until it is homogeneous; forming said heated, homogeneous mixture into a shaped article; cooling said shaped article; and removing said liquid processing aid from said shaped, cooled article.

In the aforementioned processes, the heated composition may be formed into the desired shaped article by such methods as casting or extrusion, the latter being preferred. Cooling of the shaped article may be effected by quenching thereof in a gaseous or liquid medium. The liquid processing aid may be removed from the cooled, shaped article, while leaving the polypropylene and the second polymer therein, by extracting the cooled shaped article with a liquid which is a good solvent for the processing aid and a non-solvent for the polypropylene and the second polymer. Extracting the cooled shaped article with a liquid which is a good solvent for the processing aid and in which the second polymer has only limited solubility and in which the polypropylene is not soluble will result in a final semipermeable membrane which is substantially free of the liquid processing aid and which, compared to the starting composition, has a reduced ratio of the second polymer to the polypropylene. Extracting the cooled shaped article with a liquid which is a good solvent for both the processing aid and the second polymer but not the polypropylene will result in a final semipermeable membrane in which the membrane forming material consists essentially of polypropylene.

BRIEF DESCRIPTION OF THE DRAWINGS

The invention will be better understood with reference to the appended drawings in which:

FIG. 1 is a schematic diagram showing the equipment and steps for making semipermeable membranes in accordance with the present invention.

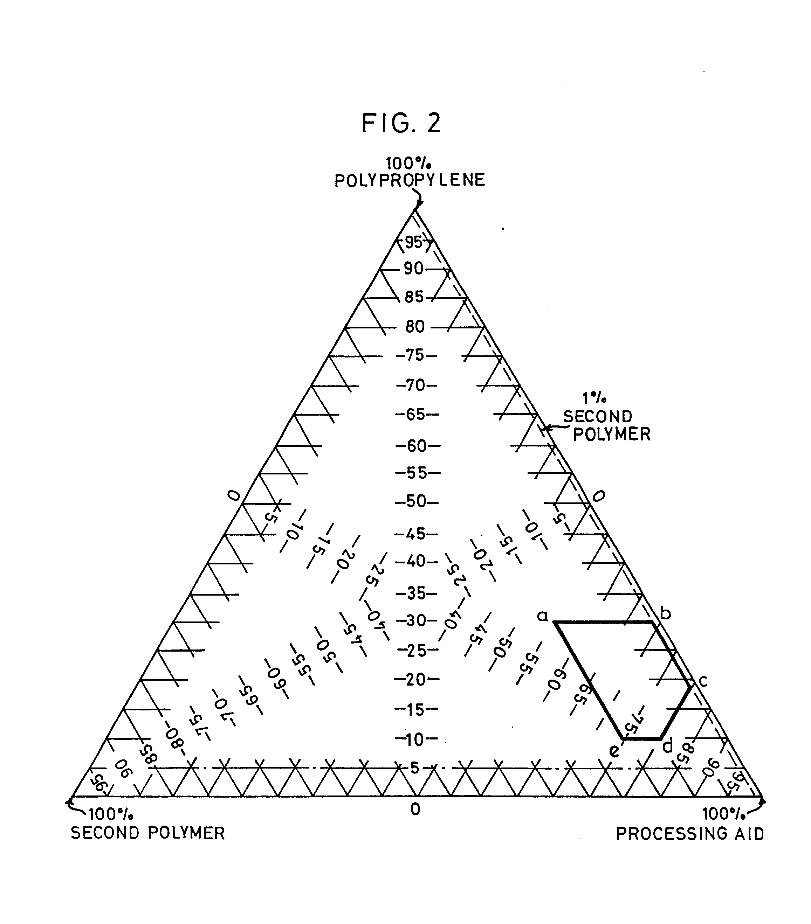

FIG. 2 is a triangular graph showing the amounts of polypropylene, second polymer and processing aid comprising the mixture which is included in the starting composition of the present invention.

As used in this specification and in the claims appended hereto, two or more components shall be considered to be compatible at a given temperature when, as judged visually, a mixture of those two or more components at the given temperature forms a single, continuous phase.

The modulus, tensile strength and percent elongation at break data reported herein were determined on an Instron tester. Modulus determinations were made at a crosshead speed of 50 millimeters per minute (mm./min.) and percent elongation at break measurements were made at a crosshead speed of 500 mm./min.

Detailed Description of the Invention

Example 1

A composition in accordance with the present invention and from which a semipermeable membrane of the invention can be made comprises a mixture of 50 parts by weight of isotactic polypropylene, 2.5 parts by weight of 1,2-syndiotactic polybutadiene, and 50 parts by weight of

ECP-79

di-(2-ethylhexyl) phthalate (dioctyl phthalate). This mixture contains 48.78% by weight of the polypropylene, 2.44% by weight of the polybutadiene, and 48.78% by weight of the phthalate ester. The polypropylene used was isotactic polypropylene commercially available under the name Soltex Fortilene Spheres 9605 and having a melt index (as determined by ASTM Method D-1238) of 12g/10 min. The 1,2-syndiotactic polybutadiene, which was obtained from Uniroyal Chemical Company under the designation RB 820, had a density of 0.901 g/cm$^3$; a crystallinity of 18%; a 1,2-unit content of 90%; melt flow index of 3g/10 min at 150°C (ASTM Method D-1238); and a Vicat softening point of 39°C (ASTM Method D-1525). The molecular weight of this material was in excess of 100,000. The di-(2-ethylhexyl) phthalate employed was plasticizer grade; it can be obtained commercially from a number of suppliers.

A semipermeable membrane was prepared from the foregoing composition using the following procedure. The three materials were blended at 165°C in a Brabender mixer until a substantially uniform molten composition was obtained. The composition was removed from the mixer and allowed to cool to room temperature. The cooled material was thereafter ground into powder form to facilitate handling and processing. The ground powder was small enough to pass through a screen of standard mesh No. 3 1/2. One gram of this powder was placed in a small pile between two nylon backing sheets. The backing sheets with the powder therebetween were placed in a hot press whose plates were preheated to 150°C. The press was closed and the pressure on the plates was increased to 10,000 psi at which level it was maintained for a period of three minutes at 150°C. The pressure was released and the sheets were placed in cold water after which they were peeled apart to recover the semipermeable membrane which had been formed therebetween. The semipermeable membrane so obtained was

79

subsequently extracted in isopropanol (a good solvent for dioctyl phthalate and a non-solvent for the syndiotactic polybutadiene) for one hour at room temperature after which the extracted membrane was removed and allowed to air dry. The resulting semipermeable membrane had a hydraulic permeability of 17.0 ml/hr.mm.Hg.m$^2$, excellent strength and could be readily handled without cracking or disintegrating. This membrane is useful as a membrane for a blood oxygenator.

## Example 2

Semipermeable membranes in accordance with the present invention can be readily made in the form of hollow fibers having a continuous lumen running longitudinally thereof. In general, the process for making such hollow fibers includes the steps of 1) providing a starting composition comprising a mixture of polypropylene, a second polymer, and a processing aid, 2) heating and mixing the starting composition until it is homogeneous, 3) forming the heated, homogeneous starting composition into a hollow fiber intermediate, 4) quenching the formed hollow fiber, and 5) treating the quenched hollow fiber intermediate to remove the processing aid only or to remove both the second polymer and the processing aid.

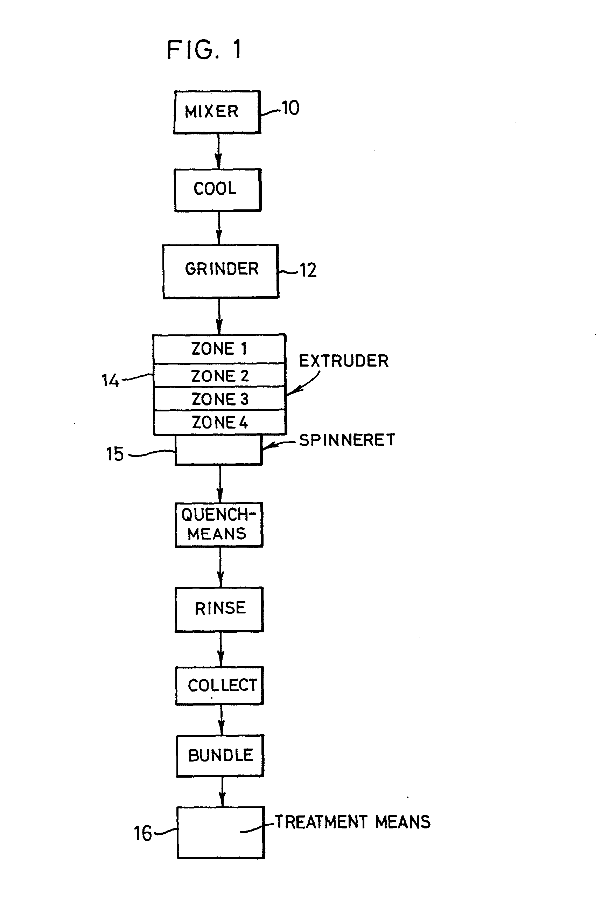

The items of equipment needed to prepare semipermeable membranes of the invention in the form of hollow fibers are readily available from various commercial suppliers. Suitable equipment is illustrated schematically in Figure 1 and comprises a mixer 10, a grinder 12, an extruder 14, and a treatment means 16 for treating the hollow fiber extrudate to remove therefrom the liquid processing aid or the liquid processing aid and the aforementioned second polymer in order to obtain the final semipermeable hollow fiber membrane.

Mixer 10 comprises a kettle fitted with an exteriorly located heating band and equipped with a motor driven stirrer. A suitable grinder is that available from C.W. Brabender (Hackensack, New Jersey) under Model No. S10/9. This grinder is fitted at its exit end with a sieving screen having square openings which are 10 mm. on a side. Extruder 14 is a general purpose extruder whose screw has a compression ratio of 2 to 1 and a length to diameter ratio of 25 to 1. The barrel of the extruder has four zones whose temperatures can be individually controlled as desired. The exit end of the extruder is fitted with a tube-in-orifice spinneret 15 for forming the material passing through the extruder into a hollow fiber extrudate. The spinneret is fitted with a heating means so that its temperature can also be controlled. The dimensions of the tube-in-orifice spinneret are selected to provide a final hollow fiber membrane having the desired inside and outside diameters. It will be understood that the tube-in-orifice spinneret will be dimensioned so as to allow for reductions in wall thickness which will occur (1) as a result of the amount of draw between the time the extrudate leaves the spinneret and the time it is cooled or quenched, and (2) as a result of the subsequent removal from the quenched extrudate of either the liquid processing aid or the processing aid and the second polymer. The tube of the tube-in-orifice spinneret is hollow and is connected to a source of fluid, such as air or nitrogen, which is pumped therethrough into the lumen of the hollow fiber extrudate in order to prevent wall collapse until such time as the extrudate has been quenched. Assuming that the liquid processing aid or the liquid processing aid and the second polymer will be removed from the extrudate by an extraction process, treatment means 16 is suitably a container in which the extrudate may be held and through which an extraction solvent can be circulated. It will be understood that the extrudate leaving the spinneret may, after quenching, be passed in continuous fashion to treatment means 16; alternatively, the extrudate may be quenched and then collected, e.g., on spools or rotating circular frames. The extrudate so collected may thereafter be treated in the treatment means which can be located, if desired, in a different part of the manufacturing site.

It is preferable, in instances where the extrudate has been quenched with a liquid such as isopropanol, to remove the quench liquid from the outer surface of the extrudate, for example, by means of a suitable rinse step. Any remaining amounts of rinsing liquid can be removed by, for example, directing a stream of compressed air at the outer surface of the rinsed extrudate. In cases where the extrudate is not immediately treated to remove the processing aid and/or the second polymer but is instead collected to await further processing, the collected extrudate may be formed by known methods into relatively short length bundles which may then be treated to remove the processing aid and/or second polymer.

A semipermeable membrane comprising polypropylene but having very little or substantially no second polymer was made using the equipment of Figure 1 and the following processing steps:

1400 grams of di-(2-ethylhexyl)phthalate (hereinafter called DOP) were placed in a kettle and heated to 180 - 190°C. 400 grams of isotactic polypropylene (Fortilene Spheres No. 9605 available from Soltex) were added to the kettle and mixed until the DOP and polypropylene were homogeneous. Homogeneity was taken to be that point at which polypropylene pellets were no longer observable in the heated composition. The temperature in the kettle was then reduced to 180°C and 160 grams of 1,2-syndiotactic polybutadiene (SPD) were added. Mixing was continued at 180°C for an additional 15 minutes. The three-component mixture (the "starting composition") was then poured into a shallow tray and allowed to cool to room temperature. The starting composition was passed through grinder 12 to form a comminuted starting composition which passed through a sieve having 10 mm. openings. Extruder 14 was preheated so that zone 1 (nearest the feed hopper) was 90°C, zone 2 was 110°C, zone 3 was 155°C, and zone 4 (the zone nearest to the tube-in-orifice spinneret) was 185°C. The spinneret, whose orifice has a diameter of 0.124 inch (0.315 cm) and whose hollow tube had an outside diameter 0.096 inch (0.244 cm), was heated to 175°C. The extruder was provided with a screen pack comprising three screens whose mesh sizes were 40, 80 and 150 respectively. This screen pack was placed in the extruder just upstream of the spinneret, the coarsest screen being placed furthest from the spinneret and the finest screen being placed nearest the spinneret. The extruder screw was rotated at 7 RPMs. The comminuted starting composition was added to the feed hopper of the extruder and forced by the screw through the tube-in-orifice spinneret. The extrudate which exited the spinneret was allowed to fall about 12 inches (30.5 cm) into a shallow tank measuring about 3 feet (91.5 cm) long, 3 inches (7.62 cm) wide and 2 inches (5.1 cm) deep and filled with isopropanol to a depth of approximately 1.5 inches (3.8 cm) where the extrudate was quenched. The extrudate was continuously drawn into and out of the isopropanol quench bath; under steady state conditions, the quench bath equilibrated at 31°C. After exiting the quench bath, the hollow fiber extrudate was passed through a water bath to rinse off residual isopropanol. Excess water was removed from the surface of the extrudate by blowing with compressed air and the extrudate was collected in coiled form. About 500 fibers, each about 30 cm. in length, were cut from the aforementioned extrudate and placed in treatment means 16 for extraction with tetrachloroethylene. The weight ratio of extracting solvent to extrudate during the extraction cycle was 14:1. A dynamic extraction was used, that is, the tetrachlorylethylene was continuously recirculated through the extraction tank. Two extraction cycles, each 30 minutes in length, were employed. After extraction, the final semipermeable hollow fibers were allowed to dry. Representative samples were then analyzed for their chemical composition and found to contain less than 0.5% by weight DOP, and less than 0.1% by weight of 1,2-syndiotactic polybutadiene, that is, the semipermeable hollow fibers resulting from the aforementioned process comprised greater than 99.4% by weight of polypropylene. The semipermeable hollow fibers were also tested for wall thickness, inside diameter, cross-sectional area, hydraulic permeability, wall ratio, maximum pore size, percent elongation at break, initial modulus, and tensile strength at break. The results of this testing were as follows:

Wall thickness: 186.9 microns

Inside diameter: 171.6 microns

Cross-sectional area: $21 \times 10^{-4}$ cm

Hydraulic permeability: 9235 ml/mm. Hg/meter$^2$/hr.

Maximum pore size: 2.6 microns (ASTM Method S316-70 [1976])

Percent elongation: 733

Modulus: 2165 kg./cm.$^2$

Tensile: 109 kg./cm.$^2$

As mentioned above, the final semipermeable membrane comprised greater than 99.4% polypropylene with small residual amounts of dioctylthalate and 1,2-syndiotactic polybutadiene. This was because the solvent selected for extraction, namely tetrachlorylethylene, is a good solvent for both the processing aid dioctyl phthalate and the second polymer 1,2-syndiotactic polybutadiene. Thus, both of the latter mentioned materials were substantially entirely extracted from the three-component extrudate exiting the tube-in-orifice spinneret. It will be recognized that the primary purpose of the isopropanol quench bath is to quench the heated extrudate after it leaves the tube-in-orifice spinneret. However, the isopropanol quench bath has a secondary effect, which in this case is to remove some of the dioctyl phthalate.

## Example 3

Seven additional samples of semipermeable membranes in hollow fiber form were prepared using the starting compositions shown in Table I and the processing equipment and steps referred to in Example 1. The chemical compositions of the final semipermeable hollow fibers are given in Table I and the physical properties thereof are set forth in Table II.

## TABLE I

| STARTING COMPOSITION* | 3A | 3B | 3C | 3D | 3E | 3F | 3G |
|---|---|---|---|---|---|---|---|
| Dioctyl Phthalate | 71.4 | 71.4 | 76.9 | 69.8 | 69.8 | 69.8 | 79.0 |
| Polypropylene | 20.4 | 23.8 | 19.2 | 23.3 | 23.3 | 23.3 | 18.0 |
| 1,2-Syndiotactic Polybutadiene | 8.2 | 4.8 | 3.9 | 6.9 | 6.9 | 6.9 | 3.0 |

| FINAL COMPOSITION* | | | | | | | |
|---|---|---|---|---|---|---|---|
| Dioctyl Phthalate | <0.5 | <0.5 | <0.5 | <0.5 | <0.5 | <0.5 | <0.01 |
| Polypropylene | >99.4 | >99.1 | >99.4 | >99.3 | >99.2 | >99.3 | >99.9 |
| 1,2-Syndiotactic Polybutadiene | 0.1 | 0.4 | 0.1 | 0.2 | 0.3 | 0.2 | 0.005 |

*Percent by weight

## TABLE II

| SAMPLE | 3A | 3B | 3C | 3D | 3E | 3F | 3G |
|---|---|---|---|---|---|---|---|
| Wall Thickness (microns) | 185 | 185 | 59.9 | 172 | 160 | 184 | 1.07 |
| Inside Diameter (microns) | 292 | 340 | 153.2 | 398 | 296 | 376 | 420 |
| Cross-Sectional Area x $10^{-4}$ | 27.8 | 30.4 | 4.0 | 30.7 | 23 | 32.4 | 17.7 |
| Hydraulic Permeability (ml/mm.Hg/m$^2$/hr) | 3992 | 907 | 46 | 989 | 371 | 600 | 1234 |
| Maximum pore size (microns)* | 2.5 | 0.6 | 0.9 | 2.2 | 1.8 | 1.9 | 1.1 |
| % Elongation (at break) | 865 | 815 | 988 | 854 | 864 | 848 | 583 |
| Initial Modulus (kg/cm$^2$) | 2022 | 2753 | 6077 | 2182 | 2649 | 2941 | 2462 |
| Tensile Strength (at break) (kg/cm$^2$) | 132 | 101 | 457 | 126 | 155 | 138 | 97.5 |

* = Determined by ASTM Method S316-70 (1976)

ECP-79

## Example 4

A semipermeable membrane comprising polypropylene and 1,2-syndiotactic polybutadiene was made using the equipment of Figure 1 and the following procedure:

1500 grams of DOP were placed in a kettle and heated to 180 - 190°C. 500 grams of isotactic polypropylene (Profax 6723 available from Hercules) were added to the kettle and mixed until the DOP and polypropylene were homogeneous, that is, until the polypropylene pellets were no longer observable in the heated composition. The temperature in the kettle was then reduced to 180°C and 100 grams of 1,2-syndiotactic polybutadiene (SPD) were added. Mixing was continued at 180°C until the three-component mixture was homogeneous; this took about 15 minutes. The three-component mixture (the "starting composition") was then poured into a shallow tray and allowed to cool to room temperature. The starting composition was broken into fragments and passed through grinder 12 to form a comminuted starting composition whose particles were sufficiently small to pass through a sieve having 10 mm. openings. Extruder 14 was preheated so that zone 1 (nearest the feed hopper) was 90°C, zone 2 was 110°C, zone 3 was 155°C, and zone 4 (the zone nearest to the tube-in-orifice spinneret) was 185°C. The spinneret, whose orifice has a diameter of 0.124 inch (0.315 cm) and whose hollow tube had an outside diameter of 0.096 inch (0.244 cm), was heated to 175°C. The extruder was provided with a screen pack comprising three screens whose mesh sizes were 40, 80 and 150 respectively. This screen pack was placed in the extruder just upstream of the spinneret, the coarsest screen being placed furthest from the spinneret and the finest screen being placed nearest the spinneret. The extruder screw was rotated at 7 RPMs. The comminuted starting composition was added to the feed hopper of the extruder and forced by the screw through the tube-in-orifice spinneret. The extrudate which exited the spinneret was allowed to fall about 12 inches (30.5 cm) into a shallow quench bath of isopropanol having a length of about three feet. Under steady state conditions, the isopropanol quench bath equilibrated at 31°C. After exiting the quench bath, the hollow fiber extrudate was passed through a water bath to remove residual isopropanol. The extrudate was collected in coiled form in a shallow container. 500 fibers, each about 30 cm in length, were cut from the aforementioned extrudate and extracted with isopropanol, a good solvent for DOP and a non-solvent for both polypropylene and 1,2-syndiotactic polybutadiene. The weight ratio of the extracting solvent isopropanol to extrudate during the extraction cycle was 14:1. A dynamic extraction was used, that is, the isopropanol was continuously recirculated through the extraction tank. Two extraction cycles, each 30 minutes in length, were employed. After extraction, the final semipermeable hollow fibers were allowed to dry. Representative samples were then analyzed for their chemical composition and found to contain 11.1% by weight of 1,2-syndiotactic polybutadiene and 88.9% by weight polypropylene. The semipermeable hollow fibers were also tested for wall thickness, inside diameter, cross-sectional area, hydraulic permeability, wall ratio, bubble point, percent elongation, modulus, and tensile strength. The results of this testing were as follows:

Wall thickness: 120 microns

Inside diameter: 431 microns

Cross-sectional area: $20.7 \times 10^{-4}$ cm$^2$

Hydraulic permeability: 18 ml/mm.Hg/meter$^2$/hr.

Maximum pore size:<0.5 microns (ASTM Method S316-70 [1976])

Percent elongation: 931

Modulus: 2188 kg./cm.$^2$

Tensile: 193 kg./cm.$^2$

As mentioned above, the final semipermeable membrane comprised 88.9% polypropylene and 11.1% 1,2-syndiotactic polybutadiene. Since the solvent selected for extraction, namely isopropanol, is a good solvent for the processing aid dioctyl phthalate and is a non-solvent for the 1,2-syndiotactic polybutadiene and the polymer polypropylene. Neither of the latter mentioned materials were extracted from the three-component extrudate exiting the tube-in-orifice spinneret. Small amounts of DOP were extracted from the extrudate in the isopropanol quench bath, with the balance thereof being substantially completely removed during the subsequent treatment with isopropanol.

### Example 5

Five additional samples of semipermeable membranes in hollow fiber form and comprising isotactic polypropylene and 1,2-syndiotactic butadiene were prepared using the starting compositions shown in Table III and the procedure described in Example 4. The chemical compositions of the final semipermeable hollow fibers are given in Table III and the physical properties thereof are set forth in Table IV.

## TABLE III

| STARTING COMPOSITION* | 5A | 5B | 5C | 5D | 5E |
|---|---|---|---|---|---|
| Dioctyl Phthalate | 78.1 | 77.6 | 74.1 | 75.5 | 71.4 |
| Polypropylene | 15.6 | 17.2 | 18.5 | 18.9 | 23.8 |
| 1,2-Syndiotactic Polybutadiene | 6.3 | 5.2 | 7.4 | 5.6 | 4.8 |
| FINAL COMPOSITION* | | | | | |
| Dioctyl Phthalate | <0.5 | <0.5 | <0.5 | <0.5 | 4.1 |
| Polypropylene | >73.9 | >77.5 | >73.9 | >78.6 | 78.5 |
| 1,2-Syndiotactic Polybutadiene | 25.6 | 22 | 25.6 | 20.9 | 17.4 |
| Ratio of Polypropylene to 1,2-Syndiotactic Polybutadiene | 2.89 | 3.52 | 2.89 | 3.76 | 4.51 |

*Percent by weight

## TABLE IV

| SAMPLE | 5A | 5B | 5C | 5D | 5E |
|---|---|---|---|---|---|
| Wall Thickness (microns) | 137 | 103 | 134 | 130 | 185 |
| Inside Diameter (microns) | 302 | 400 | 393 | 397 | 443 |
| Cross-Sectional Area x $10^{-4}$ | 18.8 | 16.2 | 22.1 | 21.5 | 36.6 |
| Hydraulic Permeability (ml/mm Hg/m$^2$/hr) | 26 | 81 | 129 | 187 | 13 |
| Bubble Point (microns) | 1.0 | 1.2 | 1.6 | 1.6 | <0.5 |
| % Elongation | 839 | 899 | 751 | 419 | 346 |
| Modulus (kg/cm$^2$) | 2123 | 2561 | 2299 | 413 | 951 |
| Tensile (kg/cm$^2$) | 124 | 183 | 116 | 64.1 | 54.1 |

EXAMPLE 6

A starting composition comprising a mixture of 50 grams of polypropylene (available from Hercules under the tradename Profax 6723), 200 grams of dioctyl phthalate, and 15 grams of cis-1,4-polybutadiene (obtained from Scientific Polymer Products, Ontario, New York as material No. 552 in catalog No. 801) was prepared. This mixture corresponds to 75.5 parts by weight dioctyl phthalate, 18.9 parts by weight polypropylene, and 5.6 parts by weight dioctyl phthalate. The starting composition also included 0.5 parts by weight, based on 100 parts of the aforementioned three component mixture, of Nauguard PHR which served as an antioxidant. The cis-1,4-polybutadiene had a Mooney viscosity of 55, and a density of 0.91 grams/cc. The polypropylene was isotactic polypropylene and had a melt viscosity (ASTM Method D-1238) of 1.3. Prior to the preparation of the starting composition of this Example 6, the following observations were made:

A. 200 parts by weight of the DOP and 50 parts by weight of the polypropylene were compatible when mixed together and heated to 180°C with stirring; phase separation of the polypropylene was observed when the heated mixture was cooled to ambient temperature.

B. 200 parts by weight DOP and 15 parts by weight of the 1,4-polybutadiene were compatible when mixed together heated to 180°C with stirring; the heated mixture remained compatible when cooled to ambient temperature.

C. 200 parts by weight of DOP, 50 parts by weight of polypropylene and 15 parts by weight of 1,4-polybutadiene were compatible when mixed together and heated to 180°C with stirring. The heated mixture exhibited phase separation when cooled to ambient temperature.

Semipermeable hollow fibers were prepared from the above starting composition using the method and apparatus described in Example 1. Chemical analysis of the resulting hollow fiber demonstrated that it consisted almost entirely of polypropylene with less than 0.5% by weight (based on membrane weight) of residual DOP and about 0.5% by weight (based on membrane weight) of residual cis-1,4-polybutadiene. Further evaluation of the resulting hollow fiber gave the following results:

| | | |
|---|---|---|
| Wall Thickness | : | 260 microns |
| Inside Diameter | : | 521 microns |
| Cross-Sectional Area | : | $64 \times 10^{-4}$ cm.$^2$ |
| Hydraulic Permeability | : | 3466 m. water/mm. Hg./meter$^2$/hr. |
| Maximum Pore Size | : | 4.2 microns (ASTM Method No. S316-70 [1976]) |
| Average Pore Size | : | 1.2 microns (ASTM Method No. S316-70 [1976]) |
| Modulus | : | 2559 kg./cm.$^2$. |
| Tensile Strength | : | 74.7 kg./cm.$^2$. |
| % Elongation | : | 727 |

The semipermeable membrane of this Example 6 is useful in plasmapheresis, which is the process of separating whole blood into its "plasma" fraction and its "cellular" or "formed element" fraction.

EXAMPLE 7

In this Example, polyvinyl chloride was used as the second polymer. The starting composition comprised (A) a mixture of 200 parts by weight of DOP, 50 parts by weight of polypropylene (Profax 6723 from Hercules) and 10 parts by weight of polyvinyl chloride, and (B) 0.5 parts by weight of Mark OTM (a commercially available antioxidant). The mixture contained 76.92 parts by weight of DOP, 19.23 parts by weight polypropylene and 3.85 parts by weight polyvinyl chloride. The starting composition contained approximately 0.2 parts by weight of the antioxidant per 100 parts by weight of the three component mixture.

Using the apparatus and method described in Example 1, the above starting composition was extruded into hollow fiber form and quenched in isopropanol. The quenched hollow fiber extrudate was collected in continuous form on a spool and subsequently divided into first and second portions. It will be recognized that the quenched extrudate comprised the polypropylene, the polyvinyl chloride and most of the dioctyl phthalate from the mixture comprising the starting composition, some of the dioctyl phthalate having been removed from the extrudate as it passed through the isopropanol quench bath.

The first portion of the quenched extrudate was extracted with isopropanol which removed the DOP, leaving behind a semipermeable hollow fiber comprising polypropylene and polyvinyl chloride in substantially the same proportions, i.e. 5 parts by weight polypropylene: 1 part by weight polyvinyl chloride, as those two components were found in the starting composition. The extracted material was subsequently rinsed in water to remove the isopropanol and allowed to dry. This semipermeable polypropylene/polyvinyl chloride hollow fiber was evaluated and found to have a maximum pore size of 1.6 microns (bubble point method) and a hydraulic permeability of 100 ml./mm. Hg./m.$^2$/hr. This semipermeable membrane is useful in plasmapheresis.

The second portion of the isopropanol quenched extrudate was extracted with tetrahydrofuran (THF) which removed the DOP and the polyvinyl chloride, leaving behind a semiper-meable hollow fiber consisting essentially of polypropylene. The THF-extracted material was subsequently allowed to dry to remove residual traces of THF. The final hollow fiber was semipermeable and had the following properties:

| | | |
|---|---|---|
| Wall Thickness | : | 184 microns |
| Inside Diameter | : | 378 microns |
| Cross-Sectional Area: | :. | $32.7 \times 10^{-4}$ cm.$^2$ |
| Hydraulic Permeability | : | 317 ml. water/mm. Hg./m.$^2$/hr. |
| Maximum Pore Size | : | 1.6 microns (ASTM Method S316-70 [1976]) |
| Modulus | : | 1539 kg./cm.$^2$ |
| Tensile Strength | : | 87.2 kg./cm.$^2$ |
| % Elongation | : | 873 |
| Force to Break | : | 303 |

This semipermeable fiber is useful as a membrane for a blood oxygenator.

## Example 8

A four component starting composition was prepared using the equipment and procedures described generally in Example 4. As will be seen, this starting composition comprises another polymeric component in addition to a mixture of polypropylene, dioctyl phthalate and 1,2-syndiotactic polybutadiene. 2641 grams of dioctyl phthalate, 528 grams of polypropylene (Profax 6723 from Hercules), 198 grams of 1,2-syndiotactic polybutadiene, and 138 grams of Tenite* Polyallomer 5020 were mixed at 180°C until homogeneous. Tenite* Polyallomer 5020, which is a blend of polypropylene and an ethylene/propylene copolymer, is available commercially from Eastman Chemical Tenite* Polyallomer 5020 has a melt flow rate of 2 grams/ 10 minutes (ASTM D-1238L), a density of 0.899 g./cc. (ASTM D-1505), a Vicat softening point of 131°C (ASTM D-1525) and a tensile strength at yield of 288 kg./cm.$^2$ (ASTM D-638). The four component starting composition contained 75.35% by weight DOP, 15.06% by weight polypropylene, 5.65% by weight of the polybutadiene, and 3.9% by weight of Tenite* Polyallomer. The ratio by weight of dioctyl phthalate : polypropylene : 1,2-syndiotactic polybutadiene in the resulting four component composition was 78.44 : 15.68 : 5.88. Upon completion of the aforementioned mixing step, the four component composition was cooled, fragmented, ground, extruded, quenched and collected as set forth in Example 4. About 500 fibers, each about 30 cm. in length, were cut from the hollow fiber extrudate and extracted with methylene chloride (solvent to fiber ratio of approximately 40:1 by weight) for one hour. After extraction and drying, the resulting fibers were tested, with the following results:

| | | |
|---|---|---|
| Hydraulic Permeability | : | 5362 ml./mm. Hg-m$^2$-hr. |
| Maximum Pore Size | : | 4.2μ (ASTM Method No. S316-70 [1976]) |
| Average Pore Size | : | 1.0μ (ASTM Method No. S316-70 [1976]) |
| Modulus | : | 3083 Kg./cm.$^2$ |
| Tensile Strength | : | 188 hg./cm.$^2$ |
| Elongation | : | 879% |
| Inside Diameter | : | 275μ |
| Wall Thickness | : | 131μ |
| Cross-Sectional Area | : | 16.7 x 10$^{-4}$ cm.$^2$ |

The final semipermeable membrane was analyzed and found to have the following composition by weight: 1.9% dioctyl phthalate, 6.31% polybutadiene with the balance of 91.79% being polypropylene and Polyallomer 5020. Assuming that Tenite* Polyallomer 5020 is entirely polypropylene, the weight ratio of polypropylene to 1,2-syndiotactic polybutadiene in the final semipermeable membrane is about 14.54. Assuming the Tenite* Polyallomer 5020 contains no polypropylene, the weight ratio of polypropylene to 1,2-syndiotactic polybutadiene in the final semipermeable membrane is 11.55. It is clear, however, that the ratio of polypropylene to polybutadiene must be at least 11.55 and not more than 14.54, since in fact, the Tenite* Polyallomer 5020 has some amount (unknown to Applicants) of polypropylene. From a consideration of the foregoing analytical data, it is seen that substantially all of the dioctyl phthalate in the extrudate was extracted by the methylene chloride; this was as expected since dioctyl phthalate is soluble in methylene chloride. It is also seen that a certain amount, namely about 6.3% by weight, of 1,2-syndiotactic polybutadiene is included in the final semipermeable membrane, even though it might be expected, based on its solubility characteristics, that substantially all of the polybutadiene component would be extracted by the methylene chloride. While not wishing to be bound by any particular theory, this may be due to the fact that the polybutadiene component is physically entrapped by the polypropylene and Tenite* Polyallomer 5020 components and is not readily accessible to the action of the extracting solvent. The membrane of this Example 8 is useful as a plasmapheresis membrane.

## Example 9

A starting composition having 79 parts by weight of dioctyl phthalate, 15 parts by weight of isotactic propylene (Profax 6723) and 6 parts by weight of 1,2-syndiotactic polybutadiene (Uniroyal RB 820) was prepared and processed as described in Example 2. The final hollow fiber membrane was analyzed and found to contain less than 0.01% DOP and less than 0.005% polybutadiene, the balance being polypropylene. The initial modulus was 2003 kg./cm.$^2$, elongation at break was 440.7%, tensile strenght was 69.9 kg/cm.$^2$, wall thickness was 144 microns, inside diameter was 379 microns, cross-sectional area was 23.6 x 10$^{-4}$ cm.$^2$, hydraulic permeability of 1495 ml./m$^2$·mmHg·hr., and maximum pore size was 0.73 microns.

0·112614

Claims:

1.  A composition from which a semipermeable membrane may be made by processing said composition at an elevated temperature, said composition comprising a mixture of polypropylene, a second polymer and a processing aid, said processing aid and said polypropylene being compatible at said elevated temperature and being incompatible when a heated mixture of said polypropylene and said processing aid is cooled to ambient temperature, said second polymer and said processing aid being compatible when heated to said elevated temperature and also being compatible when a heated mixture of said second polymer and said processing aid is cooled to ambient temperature, said mixture being compatible at said elevated temperature and exhibiting phase separation of at least said polypropylene at ambient temperature.

2.  A composition according to Claim 1 wherein said second polymer is selected from the group consisting of syndiotactic polybutadiene, cis-1,4-polybutadiene, and polyvinyl chloride.

3.  A composition according to Claim 1 or /2 wherein said processing aid is di-(2-ethylhexyl) phthalate.

4.  A composition according to Claim 1 or /2 wherein said mixture comprises:

    a)  from about 10 percent to about 30 percent by weight of polypropylene;

    b)  from about 1 percent to about 15 percent by weight of said second polymer; and

c)   from about 55 percent to about 80 percent by weight of said processing aid, the percentages of the foregoing components being such that for a given mixture, they equal one hundred percent.

5. A composition according to Claim 4 wherein said processing aid is di-(2-ethylhexyl) phthalate.

6. A composition according to/Claims 1/which comprises, in
any one of   to 5
addition to said mixture, another polymeric component.

7. A composition according to Claim 6 wherein said another polymeric component is a blend of polypropylene and an ethylene/propylene copolymer.

8. A composition from which a semipermeable membrane comprising polypropylene may be made, said composition comprising a mixture of polypropylene, syndiotactic polybutadiene, and dioctyl phthalate, said mixture having a composition falling within the shaded area bounded by abcde of Figure 2 of the accompanying drawings.

9. A composition according to Claim 8 which further comprises another polymeric component.

10. A composition according to Claim 9 wherein said another polymeric component is a blend of polypropylene and an ethylene/propylene copolymer.

11. A process for making a semipermeable membrane consisting essentially of polypropylene, said process comprising the steps of:

a)   providing a composition according to/Claims 1 to 10;
any one of

b)   heating said mixture until it is homogeneous;

c) forming said heated homogeneous mixture into a shaped article;

d) cooling said shaped article; and

e) treating said shaped article to remove therefrom said second polymer and said processing aid.

12. A process for making a semipermeable membrane consisting essentially of polypropylene, said process comprising the steps of:

a) providing a mixture of from about 10 percent to about 30 percent by weight of polypropylene, from about 1.0 percent to about 15 percent by weight of a second polymer selected from the group consisting of polybutadiene and polyvinyl chloride, and from about 55 percent to about 80 percent by weight of dioctyl phthalate, the percentages of the foregoing components being such that for a given mixture, they equal one hundred percent;

b) heating said mixture until it is homogeneous;

c) forming said heated homogeneous mixture into a shaped article;

d) cooling said shaped article; and

e) treating said shaped article to remove therefrom said second polymer and said dioctyl phthalate.

13. A process for making a semipermeable membrane comprising polypropylene and a second polymer selected from the group consisting of syndiotactic polybutadiene, cis-1,4-polybutadiene and polyvinyl chloride, said process comprising the steps of:

a) providing a starting composition which comprises mixture of from about 10 percent to about 30 percent by weight of polypropylene, from about 1.0 percent to about 15 percent of said second polymer, and from about 55 percent to about 80 percent by weight of di-(2-ethylhexyl) phthalate;

b) heating said mixture until it is homogeneous;

c) forming said heated homogeneous mixture into a shaped article;

d) cooling said shaped article; and

e) heating said shaped article to remove therefrom said di-(2-ethylhexyl) phthalate.

14. A process according to Claim 13 wherein said starting composition includes, in addition to said mixture, another polymeric component.

15. A process according to Claim 14 wherein said another polymeric component is a blend of polypropylene and an ethylene/propylene copolymer.

16. A process according to Claim 13,/wherein said second
14, or 15
polymer is syndiotactic polybutadiene.

17. A semipermeable membrane comprising isotactic polypropylene and 1,2-syndiotactic polybutadiene.

18. A semipermeable membrane comprising isotactic polypropylene and 1,2-syndiotactic polybutadiene, wherein the ratio by weight of said polypropylene to said polybutadiene is at least about 2.89.

19. A semipermeable membrane according to Claim 18 wherein the ratio by weight of said polypropylene to said polybutadiene is from about 2.89 to about 11.6.

20. A semipermeable membrane comprising isotactic polypropylene and polyvinyl chloride.

21. A semipermeable membrane comprising isotactic polypropylene and polyvinyl chloride, wherein the ratio by weight of said polypropylene to said polyvinyl chloride is about 5 to 1.

22. A semipermeable membrane comprising isotactic polypropylene, 1,2-syndiotactic polybutadiene, and an ethylene/propylene copolymer.

23. A semipermeable membrane consisting essentially of polypropylene and having an elongation at break of at least about 440%.

24. A semipermeable membrane consisting essentially of polypropylene and having an initial modulus of at least about 2022 kg./cm.$^2$ and an elongation at break of at least about 440%.

FIG. 1

FIG. 2